# EUROPEAN PATENT APPLICATION

(11) **EP 0 778 018 A1**
(43) Date of publication of application: **11.06.1997**
(21) Application number: 96119286.1
(22) Date of filing: 02.12.1996
(51) Int. Cl.: A61J 7/00, B65D 75/32, B65D 75/34, A47G 21/04

(54) **Spoon-shaped peel-off container for the administration of single premeasured doses**

(30) Priority: 06.12.1995 IT MI952565
(71) Applicant: Dompé S.P.A., I-67100 L'Aquila (IT)
(72) Inventor: Boltri, Luigi, 67100 L'Aquila (IT); Cassandri, Rocco, 67100 L'Aquila (IT); Clavenna, Gaetano, 67100 L'Aquila (IT); Gentile, Marco, 67100 L'Aquila (IT)
(74) Representative: Minoja, Fabrizio

(57) **Abstract**

A description is provided of a peel-off spoon for containing a dose of an oral liquid composition, comprising a hollow thermoformed body (4) having an extension (6) acting as a handle and closed by a peel-off film or foil (7) consisting of one or more layers, to be removed at the time of use.

A blister pack is formed of a plurality of spoons joined together by a pre-breakage line.

A description is also provided of a method for the manufacture of said peel-off spoon.

## Description

The present invention relates to a peel-off container for the administration of single pre-measured doses, containing a dose of a liquid oral composition, as well as to a method for the manufacture thereof.

As is known, liquid oral compositions, in particular in the pharmaceutical sector, such as syrups and solutions for oral consumption in general, are normally packaged in bottles, from which the user removes, as required, the dose to be taken, said dose being consumed by means of a container for the administration of single pre-measured doses or directly using a measure contained inside the actual packaging of the bottle.

This gives rise to numerous drawbacks, such as the high cost of the bottle, which must be provided with a "childproof" closure, the latter in turn often creating problems as regards removal and/or refitting onto the bottle.

Moreover, there are problems of a practical nature associated with removal of the exact dose of a liquid composition from the bottle, as well as problems of dripping and spillage onto the bottle, which in the case of sticky substances may prevent proper re-closing thereof.

The object of the invention is to eliminate the aforementioned drawbacks, providing single-dose packs for liquid oral compositions, which may be manufactured at a low cost, and which guarantee totally aseptic conditions of the product and allow simple and safe administration thereof.

This object is achieved, in accordance with the invention, by means of a peel-off measuring device pre-filled with the required dose of a liquid oral composition and provided with a handle so as to facilitate administration. Preferably the measuring device is a spoon which comprises a hollow body for containing the product, conveniently formed by means of thermoforming or using other known techniques for moulding, with suitable moulds, one or more plastic materials, and closed with film or foil material consisting of one or more layers, suitably heat-sealed onto the body.

The body or base of the spoon, which obviously has an extension acting as a handle, is made of one or a combination of the following materials: polyethylene, polypropylene, polystyrene, PVDC, PET, PVC and the like.

The peel-off film or foil material consisting of one or more layers comprises a combination of elements such as polyethylene, aluminium, paper, thermo-lacquer, PET and the like joined together by means of suitable adhesives.

The innermost layer of the peel-off part is made of a material compatible with that of the spoon body, such as for example polyethylene, so as to allow heat-sealing.

The peel-off spoon according to the invention is advantageously manufactured in the form of blister packs comprising two or more spoons separated by pre-breakage lines, so as to allow easy separation thereof when used.

The method for the manufacture of peel-off spoons according to the invention substantially consists in intermittent feeding of a sheet of plastic material, thermoforming in said sheet the cavities or seats for containing the product, filling these seats with a liquid oral composition, heat-sealing a strip of film or foil material onto said thermoformed sheet, at least along the contour of said seats, forming pre-breakage lines separating one spoon from another, and cutting the manufactured articles into the desired shape.

Further characteristic features of the invention will emerge more clearly from the detailed description which follows, with reference to an embodiment thereof provided purely by way of a non-limiting example, illustrated in the accompanying drawings, in which:
**Figure 1** is a top plan view of a blister pack comprising two peel-off spoons according to the invention;
**Figure 2** is a cross-sectional view along the line II-II of Figure 1;
**Figure 3** is a cross-sectional view along the line III-III of Figure 1;
**Figure 4** is a schematic view showing a spoon according to the invention during peeling-off of the protective film or foil.

With reference to said figures, 1 denotes a double blister pack comprising two peel-off spoons according to the invention, indicated by the reference number 2, joined together by a pre-breakage line 3.

Each spoon 2 comprises a concave body or base 4 with an internal seat for containing a liquid oral composition 5, and an extension 6 acting as a handle.

The body or base 4 of the spoon 2 is obtained by means of thermoforming plastic material, such as polyethylene, polypropylene, polystyrene, PVDC, PET and the like or combinations thereof.

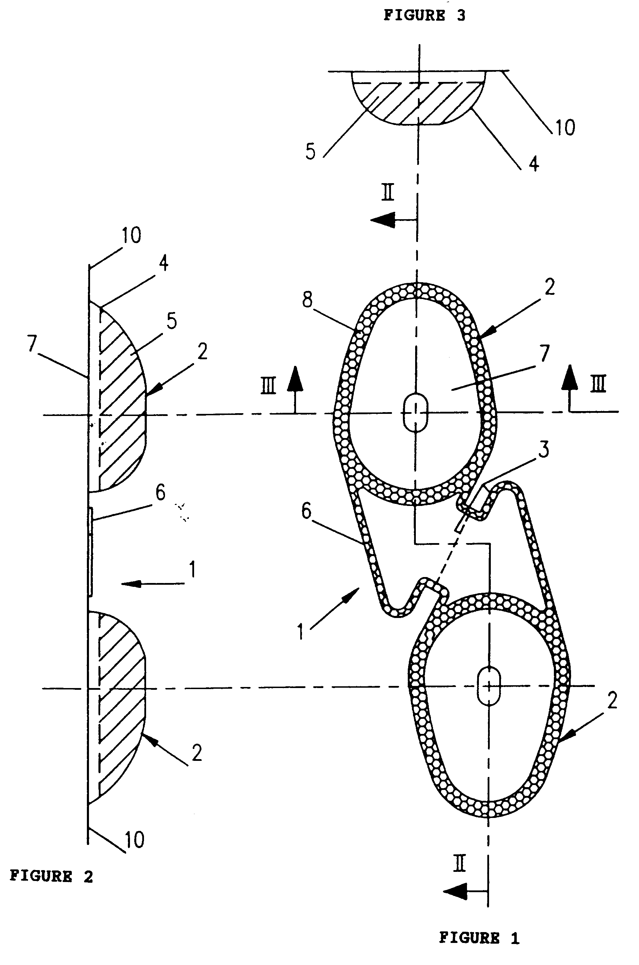

The hollow body 4, filled with a suitable dose of liquid 5, is closed by means of a peel-off strip of film or foil material 7 consisting of one or more layers, heat-sealed onto the body 4 along the hatched path 8 shown in Figure 1. This path 8, in the example shown in Figure 1, extends along the external perimeter of the blister pack 1, in addition to closing off the perimeter of the hollow seats of each spoon. It is obvious, however, that the heat-sealing line 8 may be limited to closing off the perimeter of the external edge 10 of the seats formed in the body 4 of each spoon 2, so as to seal the contents thereof.

The peel-off strip 7 may be made of any suitable material, such as polyethylene, aluminium, paper, thermo-lacquer, PET and the like, and advantageously of a combination of layers of some of these elements joined together by means of adhesives.

So as to permit thermoforming, in the case where the strip of film or foil material 7 consists of several layers, the internal layer will be made of a material compatible with that of the body 4. Alternatively, sealing of the strip 7 onto the body 4 may be performed by means of gluing.

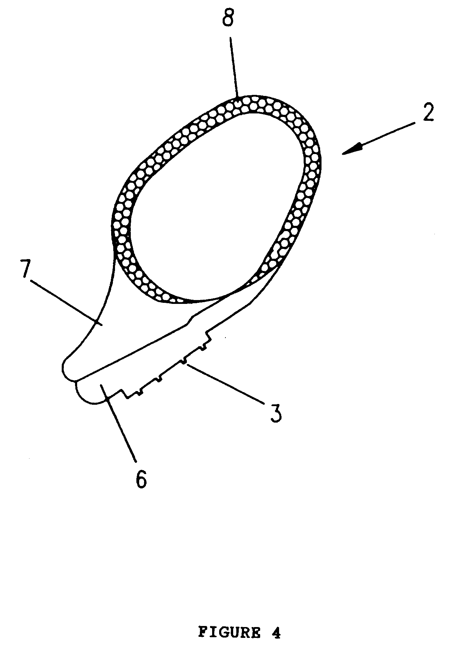

Figure 4 shows a spoon 2 removed from the blister pack 1, after breakage along the pre-weakening line 3. This figure also shows the initial stage of peeling-off of the sealing strip 7, which is started from the pre-breakage line 3 where the strip 7 is not sealed onto the body 4.

The shape of the spoon 2 and the associated handle 6 have only been shown by way of example in the accompanying figures, it being obvious that they may have any configuration or size, depending on the use for which the spoon is intended.

It is also obvious that the double blister pack 1 shown in the accompanying drawings is also intended as a example, it being able to comprise any number of peel-off spoons 2, from a minimum of 1 to a maximum number compatible with the package which is to be provided.

The sealing strip 7 could also cover only the hollow body 4 of each spoon 2, having an external gripping portion, without being extended to cover entirely the handles 6, as shown in the accompanying figures. However, total covering of the spoon 2 is convenient because it is obtained with the preferred method for the manufacture of peel-off spoons, according to the invention, which will now be briefly described.

This method consists in intermittently feeding, into a thermoforming station, a continuous sheet of plastic material in which the seats of the hollow bodies 4 are formed.

In a following filling station, these seats are filled with a predetermined dose of liquid product.

In a following joining/sealing station the strip of film or foil material 7 is applied and heat-sealed at least along the contour of the seats of the hollow bodies 4.

Finally, the sheet of plastic material complete with sealing strip 7 is cut so as to obtain the blister pack 1 shown in the accompanying figures or a blister pack of any desired shape. During, prior to or after these cutting operations, a pre-breakage line 3 is also formed so as to facilitate separation of the spoons 2 at the time of use.

## Claims

1. Peel-off spoon containing a predetermined dose of a liquid oral composition (5), comprising a hollow body (4) made of plastic material defining a seat for containing said liquid dose (5), having an extension (6) acting as a handle, and a strip of peel-off film or foil material (7) consisting of one or more layers, sealed at least along a peripheral edge (10) of the seat of said hollow body (4).

2. Peel-off spoon according to Claim 1, characterized in that said seat of the hollow body (4) for containing the liquid dose is thermoformed.

3. Peel-off spoon according to Claim 1, characterized in that said strip of film or foil material (7) is heat-sealed onto the body (4).

4. Peel-off spoon according to Claim 1, characterized in that said strip (7) of film or foil material is glued onto the body (4).

5. Peel-off spoon according to Claim 1, wherein the plastic material forming said hollow body (4) and said handle (6) comprises at least one of the following materials: polethylene, polypropylene, polystyrene, PVDC, PET, PVC and the like.

6. Peel-off spoon according to Claim 1, wherein said strip of film or foil material (7) comprises at least one layer of one of the following materials: polyethylene, aluminium, paper, thermo-lacquer, PET and the like.

7. Blister pack comprising at least two peel-off spoons according to any one of the preceding claims, joined together by a respective pre-breakage line (3).

8. Blister pack according to Claim 7, wherein the sealing line of the strip of film or foil material (7) extends along the perimetral edge of the blister pack, including the edge (10) of each seat of the hollow body (4).

9. Method for the manufacture of peel-off spoons according to any one of Claims 1 to 7, comprising the stages of:
- intermittently feeding a sheet of plastic material;
- thermoforming in said sheet hollow bodies (4) with respective concave seats;
- filling said seats with a respective predetermined dose of a liquid oral composition (5);
- applying, onto said thermoformed sheet, a strip of film or foil material (7) consisting of one or more layers and sealing said strip (7) at least along the contour of each seat of the hollow body (4);
- cutting the manufactured article into the desired configuration.

10. Method according to Claim 9, wherein said cutting stage results in the formation of at least two peel-off spoons, separated from one another by means of the respective pre-breakage line (3) formed during, before or after said cutting stage.
